# EUROPÄISCHE PATENTSCHRIFT

(11) **EP 2 310 265 B1**
(45) Veröffentlichungstag und Bekanntmachung des Hinweises auf die Patenterteilung: **21.10.2015**
(21) Anmeldenummer: 09781126.9
(22) Anmeldetag: 27.07.2009
(51) Int. Cl.: B64D 13/00, F28F 3/12, F28F 1/00, F28D 21/00

(54) **WÄRMEÜBERTRAGER FÜR DIE AUSSENHAUT EINES FLUGZEUGS**
HEAT EXCHANGER FOR THE OUTER SKIN OF AN AIRCRAFT
ÉCHANGEUR THERMIQUE POUR L'ENVELOPPE EXTÉRIEURE D'UN AÉRONEF

(30) Priorität: 31.07.2008 DE 102008035823; 31.07.2008 US 137472 P
(43) Veröffentlichungstag der Anmeldung: 20.04.2011
(73) Patentinhaber: Airbus Operations GmbH, 21129 Hamburg (DE)
(72) Erfinder: PIESKER, Markus, 21339 Lüneburg (DE)
(74) Vertreter: Maiwald Patentanwalts GmbH
(86) Internationale Anmeldenummer: PCT/EP2009/059665
(87) Internationale Veröffentlichungsnummer: WO 2010/012684

(56) Entgegenhaltungen:
- EP-A- 0 584 733
- WO-A-2005/063569
- DE-A1- 3 824 471
- US-A- 4 819 720
- US-A- 5 667 168

## Beschreibung

### TECHNISCHES GEBIET

Die Erfindung betrifft ein Flugzeug mit mindestens einem Wärmeübertrager für die Außenhaut des Flugzeugs.

### HINTERGRUND DER ERFINDUNG

In modernen Verkehrsflugzeugen existieren vielfältige Komponenten mit einem gewissen Kühlbedarf. Beispielsweise sind Klimatisierungssysteme auf die Zufuhr bzw. Erzeugung von Kälte zum Bereitstellen eines größtmöglichen thermischen Komforts für die Passagiere an Bord des Flugzeugs angewiesen, wohingegen beispielsweise eine Reihe von elektronischen Geräten und Einrichtungen Abwärme erzeugt, die aus dem Flugzeug heraustransportiert werden muss. Durch die zunehmende Integration von elektrischen Geräten in Flugzeugen werden vermehrt Kühlsysteme installiert, die flüssige Kältemittel zum Wärmetransport verwenden. Derartige Kühlsysteme eignen sich zum Abführen von relativ großen Wärmemengen, welche in einem Flugzeug praktisch nicht akkumuliert werden können. Es wäre weiterhin besonders aufgrund des hohen elektrischen Leistungsbedarfs auch nachteilig, solche großen Wärmemengen durch aktive Kühlung mittels Kältemaschinen zu eliminieren.

In der Industrie - etwa in der Automobilbranche, im Anlagenbau und in der Elektronikindustrie - existiert eine große Vielfalt von technischen Lösungen und Bauformen von Wärmeübertragen zum Kühlen von Geräten und anderen Einrichtungen. Es ist bekannt, Wärmetauscher in Flugzeugen einzusetzen, die ihre Wärme über die Außenhaut an die Umgebung des Flugzeugs abgeben. Dies wird beispielsweise in EP 06 55 593 A1 beschrieben, jedoch findet der dort beschriebene Wärmeübertrager Verwendung in einem aktiven Kühlsystem für Lebensmittel, bei dem zum Unterstützen von anderen Wärmesenken zusätzlich auch Außenhautwärmetauscher eingesetzt werden können. Aufgrund der unterschiedlichen Betriebsbedingungen eines Verkehrsflugzeugs, die sich etwa in stark variierenden Umgebungstemperaturen niederschlagen, ist der offenbarte Außenhautwärmetauscher nur zur zusätzlichen Unterstützung eines herkömmlichen aktiven Kühlsystems bei hohen Temperaturdifferenzen gegenüber der Umgebungsluft geeignet.

US 4 819 720 A, welche alle Merkmale des Oberbegriffs des Anspruchs 1 aufweist und als nächstliegender Stand der Technik angesehen wird, offenbart ein Flugzeug mit einem Hautwärmetauscher. EP 0 584 733 A1 definiert ein Kühlsystem zur Kühlung von Lebensmitteln in einem Flugzeug, bei dem ein Flächenkühler in einem Abstand außerhalb eines Flugzeugrumpfs angeordnet ist.

### ZUSAMMENFASSUNG DER ERFINDUNG

Die Aufgabe der Erfindung ist, einen Wärmeübertrager für die Außenhaut eines Flugzeugs vorzuschlagen, der dazu geeignet ist, relativ große Wärmemengen von Geräten und Einrichtungen innerhalb des Flugzeugs an die Umgebungsluft abzugeben, ohne im Hintergrund auf eine aktive Kühlung durch Vakuum oder Verdampferkühleinheiten angewiesen zu sein. Die Aufgabe der Erfindung ist ferner, ein Kühlsystem für ein Flugzeug vorzuschlagen, bei dem möglichst effektiv über einen Wärmeübertrager für die Außenhaut des Flugzeugs Wärme an die Umgebung des Flugzeugs abgegeben werden kann.

Diese Aufgabe wird gelöst durch ein Flugzeug mit mindestens einem Wärmeübertrager für eine Außenhaut des Flugzeugs, der Wärmeübertrager, aufweisend mindestens eine Zufuhrleitung und mindestens eine Abfuhrleitung für ein Kühlmittel, mindestens ein Bündel von Kühlmittel durchströmten Kühlmittelkanälen und mindestens einen Spalt zwischen den Kühlmittelkanälen und einem Deckel eines Stege aufweisenden Gehäuses zum Aufnehmen der Kühlmittelkanäle, der zum Durchströmen von Luft mindestens einen Lufteingang und mindestens einen Luftausgang aufweist, wobei sich die Kühlmittelkanäle zum Abgeben von Wärme an die Umgebung des Flugzeugs bei an der Außenhaut befestigtem Wärmeübertrager zumindest bereichsweise direkt an der Außenhaut des Flugzeugs positioniert sind. Ferner sind zwei in Flugzeughochrichtung voneinander beabstandete Schlitze in der Außenhaut des Flugzeugs zum Erzeugen einer Konvektionsströmung von Luft aus der Umgebung des Flugzeugs in den mindestens einen Spalt vorhanden.

Der erfindungsgemäße Wärmeübertrager zielt darauf ab, Wärme über eine Reihe von Kühlmittelkanälen in direktem Kontakt mit der Außenhaut des Flugzeugs möglichst effektiv zu übertragen. Bevorzugt wird die Wärme möglichst ohne Kontaktwiderstand auf die Außenhaut übertragen, was gleichermaßen bedeutet, dass die Kühlmittelkanäle nicht unbedingt eine geschlossene Oberfläche aufweisen müssen, sondern auch zur Außenhaut hin offen sein können. Vorteilhaft dabei wäre, dass das warme Fluid direkt in Kontakt zur Außenhaut ist. Demnach ist erforderlich, die Kühlmittelkanäle zumindest bereichsweise direkt an einer Außenhaut des Flugzeugs zu positionieren, so dass sie derart an einer Befestigungsfläche oder an der an der Außenhaut zu befestigenden Seite des Wärmeübertragers angeordnet sein sollten, dass durch Befestigen des Wärmeübertragers an der Außenhaut ein direkter Kontakt zwischen den Kühlmittelkanälen und der Außenhaut zustande kommt.

Durch entsprechende Dimensionierung der vom Wärmeübertrager in Anspruch genommenen Fläche können auch große Wärmemengen bei relativ geringen Temperaturdifferenzen zwischen dem Kühlmedium und der Umgebungsluft des Flugzeugs abgeführt werden, was durch die besonders flache Bauart ermöglicht wird. Je nach Bedarf können Luft-Luft- oder Flüssig-Luft-Wärmeübertrager sowie luftgekühlte Kondensatoren betrieben werden. Die konstruktiven und integrativen Forderungen eines erfindungsgemäßen Wärmeübertragers sind auf die besonderen Gegebenheiten und Anforderungen von Flugzeugen zugeschnitten, so dass die für einen optimalen Flugzeugbetrieb wichtigen Leistungsparameter so wenig wie möglich beeinflusst werden. Im Einzelnen sind dies besonders ein geringstmöglicher (zusätzlicher) Luftwiderstand, ein geringer Stromverbrauch, ein geringes Gewicht sowie geringe Bauraumerfordernisse. Hierzu ist ein Reservieren von Bauraum für den Wärmeübertrager nicht notwendig. Dadurch können auch die Längen der Kühlmittelleitungen minimiert werden, so dass das Gewicht aus Leitungen und Kühlmittel reduziert werden kann. Dies wird dadurch gelöst, dass das Kühlmittel, welches sich im übrigen nicht auf lediglich flüssige Kühlmittel beschränkt, direkt unter der Außenhaut des Flugzeugs geführt wird und sich beispielsweise bei Integration auf der Innenseite der Außenhaut nur eine geringe radiale Erstreckung ergibt, die andere Bauelemente im Innern des Flugzeugs nicht behindert. Ein minimaler Stromverbrauch begründet sich mit einer elektrischen Pumpe zum Fördern des Kühlmittels durch den erfindungsgemäßen Wärmeübertrager, der jedoch deutlich geringer ist als der eines elektrischen Kühlsystems.

Während des Flugbetriebs erfolgt die Kühlwirkung durch die an der Außenhaut strömende Umgebungsluft. Aus diesem Grunde würde sich der erfindungsgemäße Wärmeübertrager vorzugsweise zum Kühlen elektrischer Notsysteme eignen, wie z. B. eine Brennstoffzelle als Notenergiesystem mit relativ großer Abwärme. Am Boden verringert sich die Wärmeabfuhr an die Außenluft, so dass bei Windstille als ungünstigstem Fall die Wärmeabfuhr auf den Anteil der freien Konvektion reduziert werden würde. Bei einer Abwärme aus einer Brennstoffzelle von beispielsweise 90°C und einer maximalen Außentemperatur von etwa 50°C am Boden würde über eine ausreichend große Wärmeübertragerfläche bei der gegebenen Temperaturdifferenz ein ausreichender Kühleffekt erreicht werden.

An dieser Stelle sei darauf hingewiesen, dass die Kühlmittelkanäle nicht unbedingt voneinander separiert und eine geschlossene Wandung aufweisen müssen. Die Kühlmittelkanäle können sowohl durch einzelne separate Rohrleitungen oder dergleichen bereitgestellt werden, als auch durch geometrische Begrenzungen in Form von Stegen und darauf angeordneten Plättchen und zur Außenhaut hin gewandten offenen Bereichen sowie entsprechend dafür notwendiger Abdichtung. In letzterem Fall kann es durchaus sinnvoll sein, dass die einzelnen Kühlmittelkanäle untereinander in Verbindung stehen und nicht vollkommen separat und unabhängig voneinander Kühlmittel durchleiten.

Der Wärmeübertrager weist ein Gehäuse zum Aufnehmen der Kühlmittelkanäle auf. Als Gehäuse ist hier jedoch kein geschlossenes kastenartiges Objekt gemeint, sondern eher eine räumliche Zusammenfassung von mehreren Kühlmittelkanälen in einer Art Rahmen, der durch einen Deckel oder dergleichen abgeschlossen werden könnte.

Prinzipiell können derartige, abgeschlossene Wärmeübertrager einen plattenförmigen Aufbau aufweisen, der denen eines Plattenwärmetauschers ähnelt oder gleichkommt. Im folgenden werden einzelne Wärmeübertrager auch als "Platte" bezeichnet. Eine Platte besteht dabei allgemein aus zwei Außenflächen, von denen eine Außenfläche zur Rumpfmitte und eine Außenfläche nach außen in die Flugzeugumgebung zeigt. Heißes Fluid strömt in die Platte hinein und wird durch mindestens eine Außenfläche des Plattenelements gekühlt. Außen weist das Plattenelement eine entsprechende Oberflächenstruktur auf, die zu einer guten Wärmeübertragung führt. Hier gibt es eine Vielzahl von Möglichkeiten, es können Strukturen oder Rippen zur Verbesserung des Wärmeübergangs aufgebracht werden. Diese Strukturen können erstellt werden durch prägen, umformen bzw. tiefziehen, fräsen. Bei einer extrudierten Platte können die Strukturen gleich bei der Herstellung aufgebracht werden, nebst Kühlkanäle. Im inneren des Plattenelements wird das heiße Fluid geführt durch Kanäle, Röhrchen oder dergleichen, um die Wärme möglichst gleichmäßig auf der Oberfläche zu verteilen. Kühlmittelkanäle können auch horizontal, in Schlangen oder spiralförmig angeordnet werden. Das Plattenelement kann auch aus zwei Plattenhälften bestehen, die dann durch Kleben, Löten, Schweißen z.B. Rollnahtschweißen miteinander verbunden werden. Die Platten lassen sich auch thermisch fügen, z.B. durch sintern bei monolitischen Werkstoffen. Rippen, die gezielte Verwirbelungen erzeugen, lassen sich so leichter einbringen.

Es ist besonders bevorzugt, dass der erfindungsgemäße Wärmeübertrager bündig in die innen liegende Rumpfstruktur installiert wird, so dass die Rumpfstruktur in dem Bereich modifiziert oder unterbrochen werden müsste. Aus diesem Grunde ist es vorteilhaft, wenn das Gehäuse zumindest bereichsweise eine Last tragende Rumpfstruktur bildet. Dadurch kann die bereits vorhandene Rumpfstruktur durch das Gehäuse des Wärmeübertragers ergänzt werden, so dass die mechanischen Eigenschaften der Rumpfstruktur erhalten bleiben.

Besonders bevorzugt weist das Gehäuse Stege und mindestens einen Deckel auf. Als Stege seien hier flächige Bauteile zu verstehen, die sich von der Außenhaut über die Kühlmittelkanäle erstrecken und gemeinsam durch einen Deckel abgedeckt werden können. Durch die Stege steigt die mechanische Festigkeit des Gehäuses und die Integration wird erleichtert.

Bei dem Wärmeübertrager befindet sich ein Spalt zwischen dem Deckel und den Kühlmittelkanälen, der zum Durchströmen von Luft mindestens einen Lufteingang und mindestens einen Luftausgang aufweist. Dadurch kann die Wärmeabgabe der Kühlmittelkanäle weiter gesteigert werden, denn durchströmende Luft entzieht den Kühlmittelkanälen an der Oberfläche Wärme, die nicht in Kontakt mit der Außenhaut ist. Dadurch kann ein effektiveres Kühlsystem bereitgestellt werden.

Weiterhin ist es bevorzugt, wenn der erfindungsgemäße Wärmeübertrager Kühlrippen zwischen den Kühlmittelkanälen vorsieht. Die Kühlmittelkanäle können an den Stellen, an denen sie die Kühlrippen berühren, ebenfalls Wärme abgeben, so dass eine weitere Steigerung der abgebbaren Wärmemenge durch den Wärmeübertrager erfolgt.

In einer weiter bevorzugten Ausführungsform des erfindungsgemäßen Wärmeübertragers weisen die Stege und/oder Kühlrippen Wirbelkanten und/oder Schlitze auf, die zum Verwirbeln von Luft geeignet sind. Dies ist aus diesem Grunde vorteilhaft, da durch turbulente Strömung ein besserer Wärmeübergang erreicht werden kann.

In einer bevorzugten Ausführungsform des erfindungsgemäßen Wärmeübertragers sind die Kühlmittelkanäle an der Innenseite der Außenhaut angeordnet. Dies führt dazu, dass kein zusätzlicher Luftwiderstand erzeugt wird und die Zu- und Abfuhrleitungen für das Kühlmittel besonders leicht zu integrieren sind. Bei dieser Ausführungsform entfällt jedoch der direkte Kontakt vorbeiströmender Umgebungsluft an den Kühlmittelkanälen.

In einer weiteren bevorzugten Ausführungsform des erfindungsgemäßen Wärmeübertragers sind die Kühlmittelkanäle an der Außenseite der Außenhaut angeordnet. Dies ist derart auszugestalten, dass der zusätzliche Luftwiderstand durch den außen angeordneten Wärmeübertrager möglichst gering ist, dennoch eine gute Umströmung der Kühlmittelkanäle gewährleistet werden kann. Die im Vorfeld genannten Stege und Kühlrippen sind auch für diese Ausführungsform möglich, sie sind dann so auszugestalten, dass ebenso der zusätzliche Luftwiderstand minimiert wird. Durch diese Ausführungsform des erfindungsgemäßen Kühlsystems kann die abgebbare Wärmemenge deutlich gesteigert werden.

Das Ausführen der Kühlmittelkanäle zumindest bereichsweise als Leitungen mit im Wesentlichen rundem oder eckigem Querschnitt ist aufgrund der leichten Fertigung vorteilhaft. Zusätzlich dazu sollte beachtet werden, dass der Durchmesser bzw. die lichte Weite der Leitungen möglichst gering gewählt werden sollte, um Gewicht zu sparen, denn Leitungen mit relativ geringem Querschnitt erfordern deutlich geringere Wanddicken als Leitungen mit größeren Querschnitten bei gleicher Druckbeaufschlagung. Viele Leitungen mit geringem Leitungsquerschnitt vergrößern die Oberfläche und bieten auf diese Weise ein höheres Potential wie Wärme abzuführen. Gleichzeitig sollte allerdings beachtet werden, die Querschnitte der Kühlmittelkanäle nicht derart flach zu gestalten, dass eine erhöhte Wölbungsneigung bei höheren Kühlmitteldrücken resultiert.

Kühlmittelkanäle mit eckigem Querschnitt können in einer günstigen Variante des erfindungsgemäßen Wärmeübertragers mit einem Sandwichkern bereitgestellt werden, der eine Vielzahl von einzelnen Kanälen mit relativ dünnen Wandungen ermöglicht.

In einer vorteilhaften Weiterbildung des erfindungsgemäßen Wärmeübertragers sind die Kühlmittelkanäle als Spalte zwischen einer Wärme aufnehmenden Platte und einem Druckschott und/oder einer Außenhaut des Flugzeugs ausgeführt. Dies erleichtert und verbessert die Kühlung durch den erfindungsgemäßen Wärmeübertrager, da die Verwendung von Luft aus der Umgebung des Flugzeugs oder aus der Passagierkabine besonders einfach ist. Die Erfindung ist nicht auf die Verwendung einer einzelnen Platte beschränkt, vielmehr könnten auch größere Stapel von Platten mit dazwischen liegenden Luftspalten oder dergleichen verwendet werden, um die Kühlleistung noch weiter zu erhöhen.

Weiterhin ist es vorteilhaft, wenn mindestens ein Schlitz in der Außenhaut des Flugzeugs zum Ermöglichen einer Luftströmung aus der Umgebung des Flugzeugs in mindestens einen Spalt hinein angeordnet ist. Die Entnahme von Kühlluft ist damit praktisch unbegrenzt möglich. Es können auch mehrere Schlitze derart angeordnet und strömungsmechanisch ausgelegt werden, das gezielt definierte Bereiche des Wärmeübertragers mit einer dosierten Kaltluftmenge umströmt werden.

Es ist zudem günstig, ein Gebläse zum Fördern von Luft in oder aus den mindestens einen Spalt vorzusehen, so dass die Kühlung noch verstärkt wird.

In diesem Sinne weist der Wärmeübertrager zum Erzeugen einer freien Konvektionsströmung zwei in senkrechter Richtung beabstandeter Schlitze in der Außenhaut des Flugzeugs anzuordnen. Bei kalter Umgebung und geringer Wärmelast kann bereits eine ausreichende Kühlung ohne zusätzlichen Energiebedarf erreicht werden.

Schließlich ist es sinnvoll, zum Reduzieren der aerodynamischen Strömungsverluste den mindestens einen Schlitz parallel zur Flugrichtung auszurichten.

Das Flugzeug kann ferner ein Kühlsystem mit mindestens einem geschlossenen Kühlmittelkreislauf aufweisen, der mit den Kühlmittelkanälen des Wärmeübertragers gekoppelt ist.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehung. In den Figuren stehen weiterhin gleiche Bezugszeichen für gleiche oder ähnliche Objekte.
Figuren 1a bis 1d zeigen eine schematische Übersicht über die Anordnung eines Wärmeübertragers an der Außenhaut eines Flugzeugs;
Figuren 2a bis 2f zeigen mögliche Varianten des Wärmeübertragers;
Figur 3 zeigt eine schematische Ansicht eines zusätzlich luftdurchströmten Wärmeübertragers;
Figuren 4a und 4b zeigen eine schematische Ansicht eines zusätzlich luftdurchströmten Wärmeübertragers im eingebauten Zustand;
Figur 5a + 5b zeigen zwei weitere Ausführungsbeispiele eines Wärmeübertragers, der zusätzlich luftdurchströmt ist.
Figur 6 zeigt eine schematische Gesamtansicht eines erfindungsgemäßen Kühlsystems in einem Flugzeug.
Fig. 7a und 7b zeigen in schematischen Ansichten sandwichartige Wärmeübertrager mit einander abwechselnden Kühlmittelkanälen und Luftkanälen.
Fig. 8 zeigt einen Ausschnitt der Außenhaut eines Flugzeugs mit Schlitzen zum Aufnehmen von Umgebungsluft.
Fig. 9 zeigt ein Ausführungsbeispiel eines Wärmeübertragers in einer Schnittansicht.
Fig. 10 zeigt ein Ausführungsbeispiel eines Wärmeübertrager in einer Schnittansicht.
Fig. 11 zeigt ein Ausführungsbeispiel eines Wärmeübertrager in einer Schnittansicht.
Fig. 12 zeigt ein Ausführungsbeispiel eines Wärmeübertrager in einer Schnittansicht.

### DETAILLIERTE BESCHREIBUNG EXEMPLARISCHER AUSFÜHRUNGSBEISPIELE

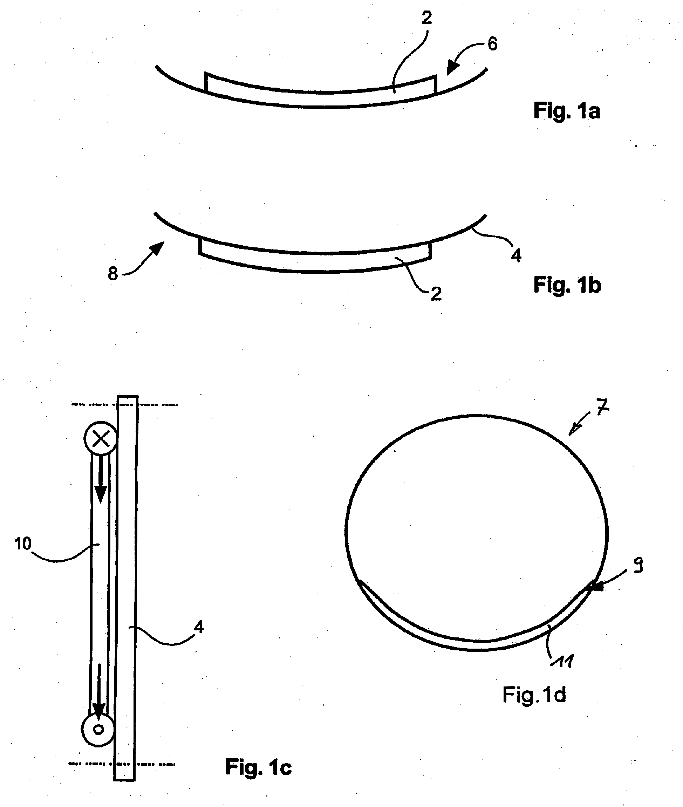

In Figur 1a wird generell gezeigt, wie ein Wärmeübertrager 2 an der Außenhaut 4. eines Flugzeugs angeordnet werden kann. Dort ist der Wärmeübertrager 2 an der Innenseite 6 des Flugzeugs angeordnet, wohingegen in Figur 1b der Wärmeübertrager 2 an der Außenseite 8 des Flugzeugs positioniert ist. Bei diesen verschiedenen Einbaupositionen ist zu beachten, dass sich unterschiedliche mechanische Anforderungen an den Wärmeübertrager 2 ergeben. Wird der Wärmeübertrager 2 an der Innenseite 6 des Flugzeugs angeordnet, muss der Wärmeübertrager 2 in besonderen Fällen zur Aufnahme von Rumpfstrukturlasten ausgerichtet sein. Bei relativ großflächigen Wärmeübertragern 2, was angesichts großer Wärmemengen ohne aktive Kühleinheiten nicht unrealistisch ist, muss stellenweise zur bündigen Installation des Wärmeübertragers 2 an die Außenhaut 4 die dort vorhandene Rumpfstruktur mit ihren Spanten, Stringern und sonstigen Versteifungsbauteilen modifiziert oder unterbrochen werden. Aus diesem Grunde ist es erforderlich, diese Lücke durch den Wärmeübertrager 2 mechanisch zu schließen. Der Wärmeübertrager 2 sollte demnach ein Gehäuse oder dergleichen aufweisen, das darauf ausgelegt ist, die örtlich entstehenden Lasten vollständig aufzunehmen.

Gerade für die Abfuhr von größeren Wärmemengen kann es sinnvoll sein, die Struktur zu modifizieren. So kann z.B. der untere Teil einer ganzen Rumfsektion 7 um 10 mm bis 25 mm radial gekürzt werden (radiale Einbuchtung 9), wie in Fig. 1d dargestellt. Die radiale Einbuchtung 9 wird dann mit einem 10 bis 25 mm dicken Wärmeübertrager 11 ausgefüllt, so dass die resultierende Flugzeugkontur unberührt bleibt und keine aerodynamischen Strömungsverluste entstehen. Hierbei bleibt die lasttragende Struktur und Außenhaut des Flugzeugs bis auf die Einbuchtung unberührt. Zu Wartungs und Reparaturzwecken könnte der Außenhautwärmeübertrager einfach abnehmbar gestaltet sein. Auch wäre es denkbar in bestimmten Situationen ohne den Wärmeübertrager zu fliegen, da schroffe Konturübergänge bei diesem Konzept nicht notwendig sind.

Für einen erfindungsgemäßen Wärmeübertrager 2 aus Figur 1b ergibt sich jedoch eine Notwendigkeit nach der Minimierung des Luftwiderstandes, da bei relativ hohen Reisegeschwindigkeiten von rund 0,8 Ma schon geringe Änderungen am Querschnitt des Flugzeugs zu einem spürbaren Treibstoffmehrverbrauch führen kann. Aus diesem Grunde sollte der erfindungsgemäße Wärmeübertrager 2 für die Einbauposition aus Figur 1b aerodynamisch glatt ausgeführt werden. Die in Fig. 1b sichtbaren Kanten sollten mit entsprechenden Verkleidungen aerodynamisch geglättet werden. Die Anordnung wie in Fig. 1b dargestellt eignet sich vor allem zum Nachrüsten existierender Flugzeuge oder zum Nachrüsten eines Testflugzeugs.

In Figur 1c wird ein als Kühlmittelleitung ausgeführter Kühlmittelkanal 10 gezeigt, der bündig an der Außenhaut 4 angeordnet ist. Durch den Kontakt zwischen dem Kühlmittelkanal 10 und der Außenhaut 4 kann eine Wärmeleitung zwischen dem Kühlmittelkanal 10 und der Flugzeugaußenhaut 4 stattfinden.

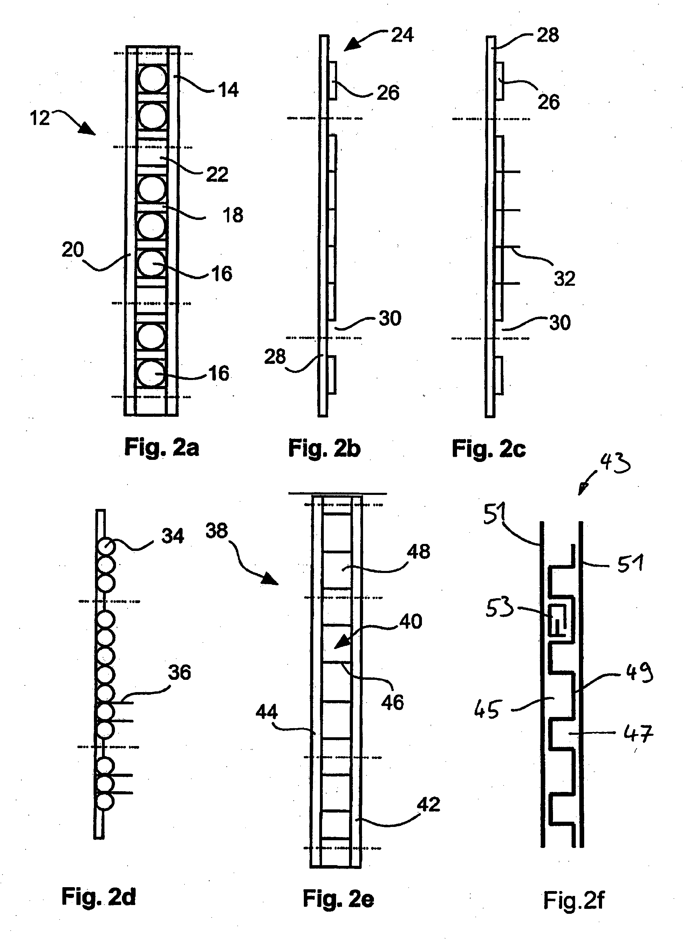

In Figur 2a wird ein Ausführungsbeispiel eines Wärmeübertragers 12 gezeigt. Der Wärmeübertrager 12 weist eine Trägerplatte 14 auf, auf der eine Reihe von als Kühlmittelleitungen ausgeführten Kühlmittelkanälen 16 positioniert ist. Zwischen den Kühlmittelkanälen 16 befinden sich Stege 18, auf denen sich ein Deckel 20 abstützt. Der Deckel 20 kann neben seiner Funktion als mechanisches Bauteil zum Aufnehmen von Rumpfstrukturlasten in Kombination mit den Stegen 18 auch als sogenanntes "Druckschott" dienen, das insbesondere dann erforderlich wird, wenn unterhalb des erfindungsgemäßen Wärmeübertragers 12 Öffnungen durch die Außenhaut des Flugzeugs vorhanden sind. Aufgrund der starken Druckdifferenz zwischen der Flugzeugumgebung und der Flugzeugkabine während des Flugs würde ohne eine Eignung des Deckels 20 als Druckschott stetig Luft aus der Kabine in die Umgebung abfließen. Zum Erfüllen dieser Aufgabe ist es möglich, dass sich zwischen dem Deckel 20 und den Stegen 18 ausreichend dimensionierte mechanische Verbindungen sowie eine ausreichende Abdichtung gegeben ist.

Zum Befestigen der Trägerplatte an der Außenhaut können stellenweise in den bündelartig angeordneten Kühlmittelkanälen 16 einzelne Kühlmittelkanäle 16 ausgespart bzw. weggelassen werden, wie beispielsweise durch das Bezugszeichen 22 angedeutet. Dort kann eine Verschraubung oder Vernietung oder eine andere geeignete Befestigung erfolgen.

In dem dargestellten Beispiel weisen die Kühlmittelkanäle 16 einen im Wesentlichen runden Querschnitt auf, der dazu führt, dass die Kühlmittelkanäle 16 mit einer relativ geringen Wanddicke dimensioniert werden können, denn bei kreisrunden Querschnitten entstehen keine Ausbeulungen wie etwa bei eckigen Querschnitten. Es ist anzustreben, eine möglichst große Anzahl von Kühlmittelkanälen 16 zu verwenden, diese jedoch mit einem relativ geringen Querschnitt auszustatten. Dadurch kann die Wanddicke der Kühlmittelkanäle 16 weiter reduziert werden und die radiale Erstreckung des erfindungsgemäßen Wärmeübertragers 12 reduziert werden. Die Anzahl der Kühlmittelkanäle 16 hängt dann von dem notwendigen Kühlmittelmassenstrom ab. Realistisch erscheinen Leitungsquerschnitte im Bereich von Millimetern, wie etwa zwischen 2mm und 10mm.

In Figur 2b wird ein zweites Ausführungsbeispiel eines Wärmeübertragers 24 gezeigt, bei dem eine Vielzahl von eckigen Kühlmittelkanälen 26 auf einer Trägerplatte 28 positioniert ist. Die lichte Weite der Kühlmittelkanäle 26 ist nicht zu groß zu wählen, da durch die Druckbelastung aufgrund des in die Kühlmittelkanäle 26 gepumpten Kühlmittels eine Ausbeulung stattfinden könnte. Auch diesem Ausführungsbeispiel sollte demnach bestrebt sein, die Anzahl der Kühlmittelkanäle 26 relativ hoch zu wählen, damit die Wanddicken relativ niedrig ausgeführt werden können. Zwischen den Kühlmittelkanälen 26 können sich auch in diesem Ausführungsbeispiel Aussparungen 30 zum Befestigen der Trägerplatte 28 an der Außenhaut des Flugzeugs befinden.

Figur 2c zeigt eine Abwandlung des Wärmeübertragers 24 aus Figur 2b, der zusätzlich mit Kühlrippen 32 ausgestattet ist, die zwischen den Kühlmittelkanälen 26 angeordnet sind.

In Figur 2d wird analog zu Figur 2c eine Anordnung von Kühlmittelkanälen 34 gezeigt, bei den zumindest bereichsweise Kühlrippen 36 zwischen zwei benachbarten Kühlmittelkanälen 34 angeordnet werden.

In Figur 2e wird die Realisierung eines Wärmeübertragers 38 durch eine Sandwichplatte bzw. ein Sandwich-Panel vorgestellt. Das Sandwich-Panel 40 befindet sich auf einer Trägerplatte 42 und wird durch ein Druckschott 44 abgedeckt. In dem Sandwich-Panel 40 befinden sich große relativ viele Wandungen 46 die die einzelnen Kühlmittelkanäle 48 ausbilden.

Schließlich zeigt Figur 2f eine einfach zu realisierende Ausbildung von Luftkanälen 45 und 53 und einem Kühlmittelkanal (heißes Fluid) 47. Die Kanäle könnten aus einem Wellblech 49 und angrenzend angeordneter Deckbleche 51 gefertigt werden. Diese drei Bleche 51 könnten z.B. aus einer 0,25 mm dicken Stahlfolie hergestellt und gelötet oder verschweißt werden (z.B. Rollnahtschweißen). Die Ausführung in Aluminium, Titan oder sogar Kunststoff ist ebenfalls denkbar. Im Luftkanal 45 könnte eine aus einem etwa 0,05 mm dicken Blech hergestellte Kühlrippe oder Verwirbelungskörper 53, zum Verwirbeln von Luft zum Erhöhen des Wärmeübergangs angeordnet sein. Hierbei eignet sich z.B. ein U-förmiges Foliensegment mit herausstehenden Folienausschnitten.

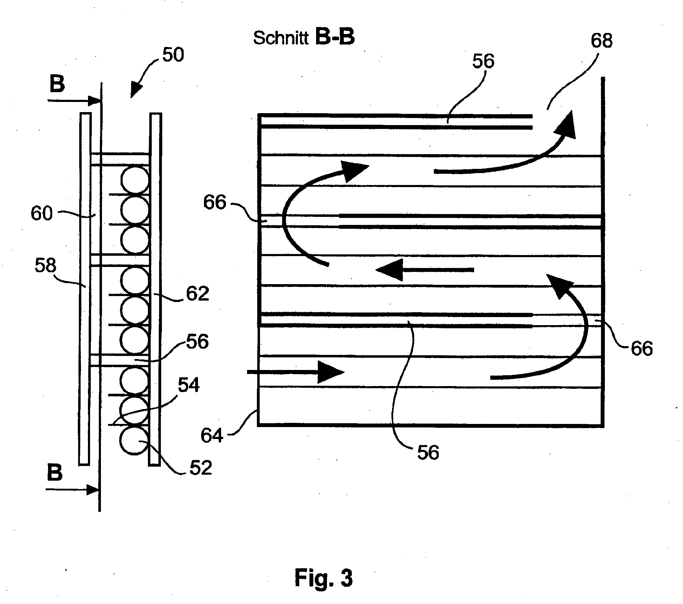

Figur 3 zeigt ein besonderes Ausführungsbeispiel eines Wärmeübertragers 50, bei dem die Vorteile der vorangegangenen Ausführungsbeispiele miteinander kombiniert werden. So weist der erfindungsgemäße Wärmeübertrager 50 mehrere Kühlmittelkanäle 52 auf, zwischen denen einzelne Kühlrippen 54 positioniert sind. In dem dargestellten Falle in Figur 3 bilden jeweils drei Kühlmittelkanäle 52 eine Gruppe, die durch Stege 56 voneinander getrennt werden. Die Stege 56 sind derart dimensioniert, dass sich zwischen den Kühlmittelkanälen 52 und einem Deckel 58 ein Spalt 60 ergibt. Der Deckel 58 bildet zusammen mit den Stegen 56 und einer Trägerplatte 62 ein Gehäuse, wobei die Trägerplatte 62 auch die Außenhaut des Flugzeugs sein kann. Exemplarisch wird in Figur 3 gezeigt, wie Luft durch den erfindungsgemäßen Wärmeübertrager 50 über den Kühlmittelkanälen 52 strömen kann. Durch einen Lufteingang 64 gelangt Luft in das Innere des Wärmeüberträgers 50 und umströmt die Stege 56, die versetzte Öffnungen 66 zum Ausbilden eines labyrinthartigen Strömungskanals aufweisen. Die Luft strömt schließlich aus dem Luftausgang 68 aus, beispielsweise in die Umgebung des Flugzeugs. Die Luftströmung strömt abschnittsweise in der gleichen Richtung wie das Kühlmittel (Gleichstrom) oder in entgegengesetzter Richtung (Gegenstrom) bzw. geht vom Gleichstrom in den Gegenstrom mit einer zusätzlichen seitlichen Strömungskomponente über. Durch diese dargestellte Anordnung des erfindungsgemäßen Wärmeübertragers 50 erfolgt die Kühlwirkung durch Wärmeleitung zwischen den Kühlmittelkanälen 52 und der Außenhaut bzw. der Trägerplatte 62, sowie durch die Luftströmung entlang der Kühlmittelkanäle 52 und der Kühlrippen 54. Zum Verstärken des Kühleffekts können beispielsweise die Rippen mit Wirbelkanten und/oder Öffnungen versehen werden, durch die vorbeiströmende Luft verwirbelt wird. Verwirbelte, turbulente Strömung hat einen Wärmeübertragungskoeffizienten, so dass die Wärmeabgabe in diesem Bereich gesteigert werden könnte.

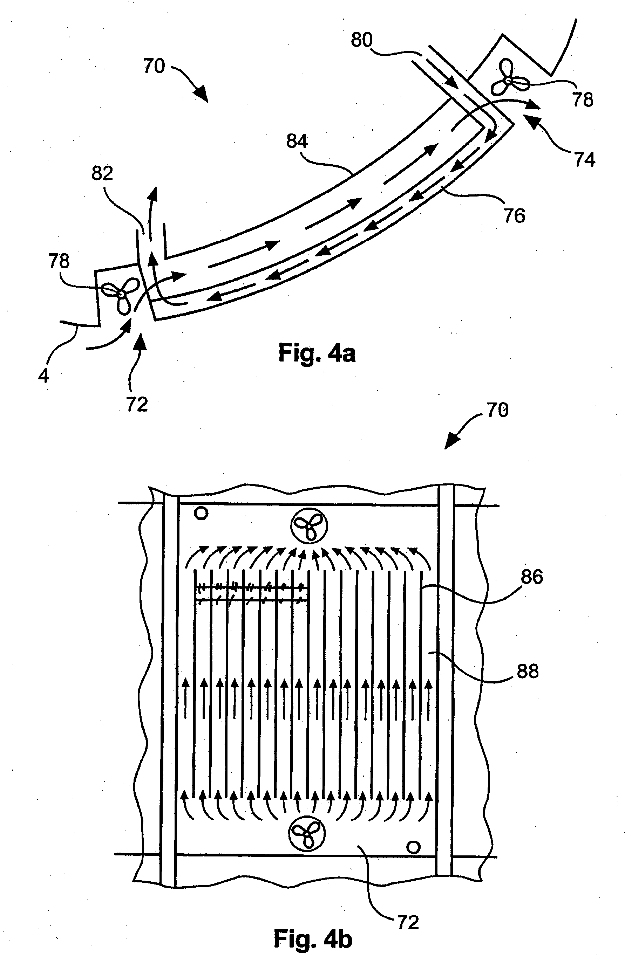

Ein in Figur 4a dargestellter Wärmeübertrager 70 weist einen Lufteinlass 72 und einen Luftauslass 74 auf, durch den Luft aus der Umgebung des Flugzeugs einströmen kann. Die Luft überstreicht Kühlmittelkanäle 76 und verlässt den Flugzeugrumpf durch den Luftauslass 74. Zum Steigern der Leistung können Gebläse 78 eingesetzt werden, die besonders dann vorteilhaft sind, wenn sich das Flugzeug am Boden befindet und keine Luftströmung herrscht. Das Kühlmittel gelangt durch eine Zufuhrleitung 80 in den Kühlmittelkanal 76 und verlässt ihn durch eine Abfuhrleitung 82. Die Strömung des Kühlmittels erfolgt beispielhaft in entgegengesetzter Richtung wie die Luftströmung (Gegenstrom), der erfindungsgemäße Wärmeübertrager ist jedoch nicht darauf beschränkt, sondern kann in diesem Ausführungsbeispiel auch gleiche Strömungsrichtungen vorsehen, falls erforderlich oder gewünscht. Aufgrund der Öffnungen 72 und 74 in der Außenhaut 4 des Flugzeugs ist erforderlich, dass der erfindungsgemäße Wärmeübertrager 70 ein Druckschott 84 aufweist. Dadurch kann vermieden werden, dass Luft aus der Kabine in die Flugzeugumgebung austritt.

In Figur 4b wird schließlich in einer Draufsicht auf den Wärmeübertrager 70 gezeigt, wie der Wärmeübergang optimiert werden kann. Hierzu befinden sich Kühlrippen 86 zwischen einzelnen Kühlmittelkanälen 88 und werden durch die vorbeiströmende Luft aus dem Lufteinlass 72 umströmt. Auch ist das Verwirbeln der durchströmenden Luft zum Erhöhen des Wärmeübergangs sinnvoll und kann die vorhergehend bereits beschrieben, durch Wirbelkanten oder Öffnungen erfolgen.

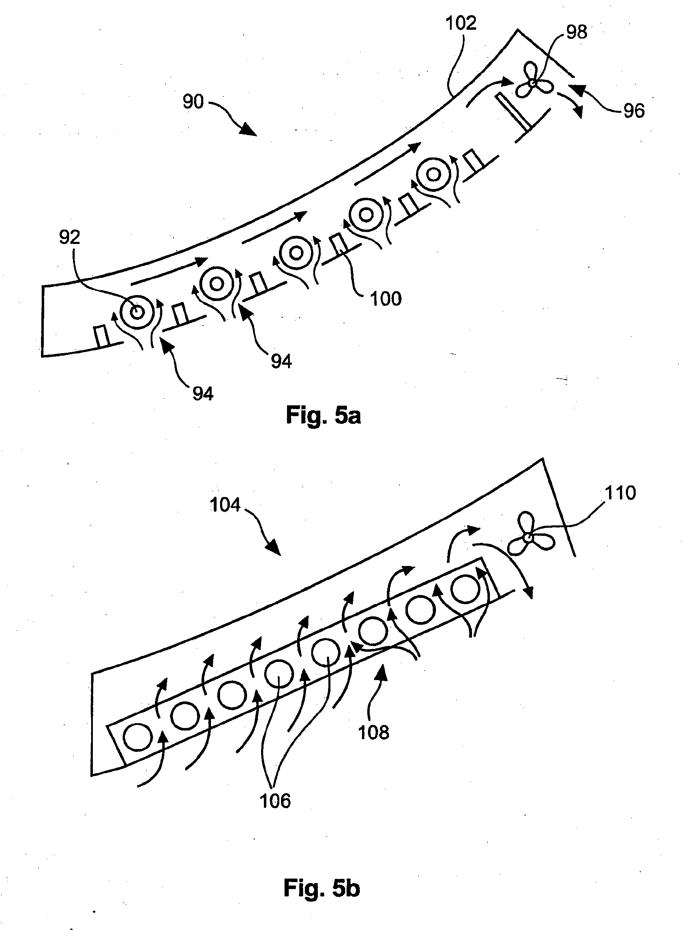

Figur 5a ist schließlich ein weiteres Ausführungsbeispiel eines Wärmeübertragers 90 gezeigt, bei dem mehrere als Lamellenrohre ausgeführte Kühlmittelkanäle 92 vorliegen, die durch einströmende Luft aus Lufteingängen 94 in Kreuzstromweise umströmt werden. Die einströmende Luft verlässt nach Umströmen der Kühlmittelkanäle 92 den erfindungsgemäßen Wärmeübertrager 90 durch den Luftausgang 96. Wie bereits vorangehend geschildert, kann auch hier ein Gebläse 98 zum Erhöhen der Kühlleistung in der Gegend des Luftausgangs 96 angeordnet werden. Zwischen den Kühlmittelkanälen 92 befinden sich in der Figur 5a Längsversteifungsbauteile 100, die auch als "Stringer" bekannt sind und der Längsversteifung des Rumpfes dienen. Aufgrund der Vielzahl an Lufteingängen 94 in der Außenhaut 4 des Flugzeugs ist auch bei diesem Ausführungsbeispiel erforderlich, dass ein Druckschott 102 das Ausströmen von Luft aus der Kabine in die Umgebung verhindert.

Schließlich wird in Figur 5b ein weiteres Beispiel eines Wärmeübertragers 104 vorgestellt, bei dem Kühlmittelkanäle 106 in Form eines in der Außenhaut des Flugzeugs installierten Lamellenkühlers 108 von Luft durchströmt werden. Bedarfsweise wird der Lamellenkühler 108 durch ein Zusätzliches Gebläse 110 unterstützt.

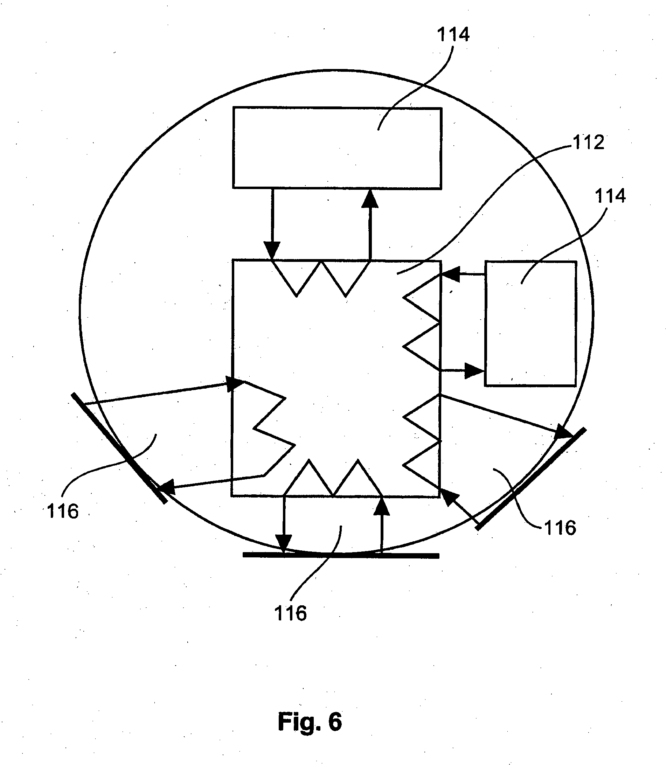

Besonders vorteilhaft bei einem Kühlsystem ist es, nach dem Vorbild der Fig. 6 die Integration eines Sammelwärmeübertragers 112 in einer Flüssig-/Flüssig-Bauweise vorzunehmen, wobei letzterer dazu geeignet ist, Wärme aus einer oder mehreren Wärmequellen 114 aufzunehmen und gleichermaßen an einen oder mehrere Wärmeübertrager 116 abzugeben. Diese Bauweise ist sehr effektiv, da auch Wärmequellen mit stark unterschiedlichen Abwärmemengen und mit hohen und niedrigen Abwärmetemperaturen ihre Wärme in die in dem Sammelwärmeübertrager 112 vorhandene Flüssigkeitsmasse abgeben können. Dadurch ist dafür Sorge getragen, dass auch mehrere in einem Flugzeug vorhandene Wärmeübertrager 116 gleichmäßig ausgelastet werden können. So entfällt die Notwendigkeit, für besonderes hohe Wärmemengen produzierende Geräte jeweils einen eigenen Wärmeübertrager vorzusehen.

In den nachfolgenden Figuren werden Integrationsbeispiele für erfindungsgemäße Wärmeübertrager in einem Flugzeug gezeigt, die sämtlich nach den vorangehend aufgeführten Prinzipien gestaltet sind.

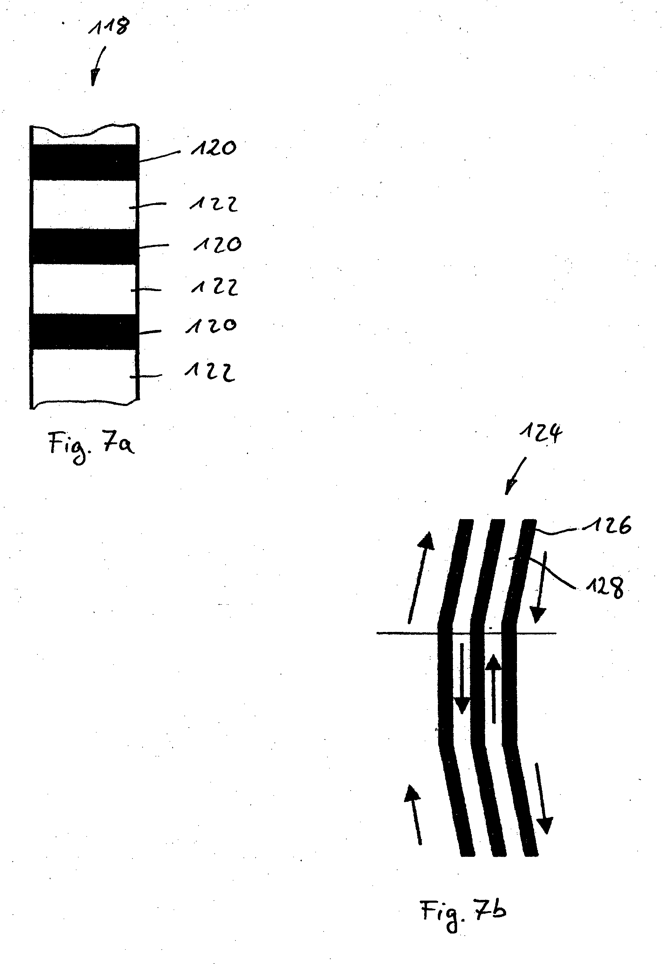

Fig. 7a zeigt einen Wärmeübertrager 118 in einer schematischen Ansicht, bei dem sich Kanäle 120 für erwärmtes Fluid und Kanäle 122 für kaltes Fluid abwechseln.

Der konstruktive Aufbau könnte dabei im Wesentlichen dem Aufbau des Wärmeübertragers 38 aus Fig. 2e entsprechen. Wenn in dem Kanal für kaltes Fluid Luft geführt wird, wäre auch das Integrieren von zusätzlichen Kühlrippen sinnvoll. Zusätzlich wird Wärme über die äußeren Begrenzungsflächen abgeführt. Eine Breite dieses Wärmeübertragers könnte in einem Bereich von 10 bis 25 mm liegen.

Fig. 7b zeigt einen weiteren Wärmeübertrager 124, bei dem mehrere Platten 126 unter Bildung von Luftspalten 128 nebeneinander angeordnet werden. In oder an jeder Platte 126 wird heißes Fluid geführt, z.B. in Kanälen. An den Seiten der jeweiligen Platten 128 kann zur Wärmeübertragung Fluid entlangströmen, bevorzugt derart, dass jede Platte 126 mit kaltem und erwärmten Fluid in Berührung gerät, wobei das kalte Fluid und das erwärmte Fluid eine zueinander entgegengesetzte Strömungsrichtung aufweisen können. Nachfolgernd wird aus Gründen der Vereinfachung ein Wärmeübertrager nach Fig. 7b immer nur mit einer Platte 126 dargestellt, wobei dies nicht als Beschränkung aufzufassen ist.

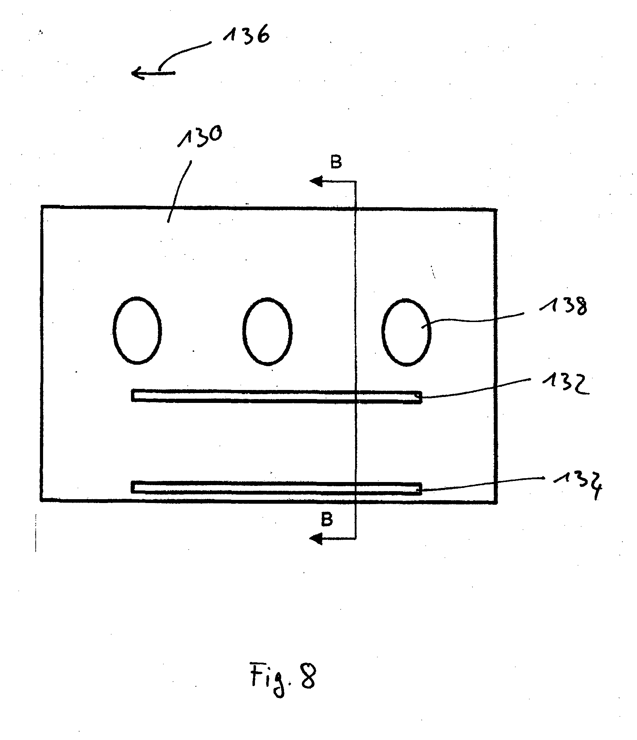

Fig. 8 dient zu Klarstellung der nachfolgenden Schnittansichten. Es wird ein Teil einer Außenhaut 130 eines Flugzeugs gezeigt, an dem sich zwei parallel zueinander angeordnete Luftschlitze 132 und 134 befinden, die sich entlang der Flugrichtung 136 des Flugzeugs erstrecken. Die Schlitze 132 und 134 befinden sich rein exemplarisch knapp unterhalb von Fenstern 138 und können genauso gut an anderen Orten des Flugzeugs angeordnet werden. Die Schlitze 132 und 134 sind bevorzugt nur wenige Millimeter breit, beispielsweise 15 mm. Die aerodynamischen Strömungsverluste des Flugzeugs sind aufgrund der Längsausrichtung der Schlitze längs des Rumpfes vernachlässigbar gering.

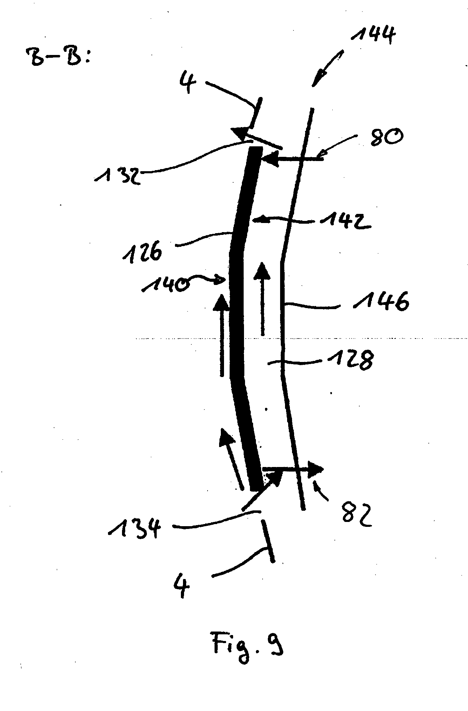

Fig. 9 zeigt eine durch freie Konvektion hervorgerufene Luftführung auf radialen Begrenzungsflächen 140 und 142 einer hinterlüfteten Platte 126, die bündig mit der Außenhaut.4 ausgerichtet und an ihrer Oberseite und Unterseite durch die Schlitze 132 und 134 von der Außenhaut separiert ist. Auf der zum Rumpfinnern ausgerichteten Seite der Platte 126 mit der Begrenzungsfläche 142 befindet sich ein Spalt 128. Im Flug wird Wärme durch die ohnehin vorhandene Außenhautreibung der Luft abgeführt. Am Boden wird die Kühlung durch freie Konvektion an den Begrenzungsflächen 140 und 142 unterstützt. Der Spalt 128 könnte zur Unterstützung der freien Konvektion eine Tiefe von mindestens 10 mm aufweisen, wobei die Platte 126 beispielhaft eine Dicke von 5 mm aufweisen könnte. Ein durch den gezeigten Aufbau gebildete Wärmeübertrager 144 wird durch ein Druckschott 146 zum Innern des Flugzeugs druckdicht abgeschlossen.

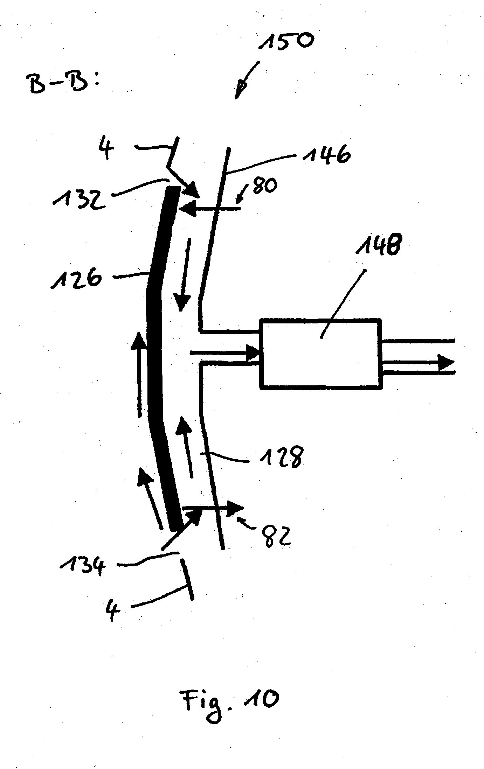

Mit freier Konvektion ist die Wärmeabfuhr allerdings sehr begrenzt. An kühlen Orten und bei geringer abzuführender Wärmelast mag diese Form der Kühlung ausreichen. Den weitaus höheren Kühleffekt lässt sich jedoch durch erzwungene Konvektion erreichen. Hierzu zeigt Fig. 10 einen modifizierten Aufbau des Wärmeübertragers 144, der über ein Gebläse 148 zum Bewegen von Kuft in dem Luftspalt 128 dient, das besonders die Kühlung beim Bodenbetrieb unterstützt. Die zum Betrieb der Kühlung notwendige Elektrizität könnte durch eine Brennstoffzelle oder durch eine Bodenversorgung aufgebracht werden. Die Brennstoffzelle bietet sich besonders dann an, wenn der erfindungsgemäße Wärmeübertrager zum Kühlen einer Brennstoffzelle eingesetzt wird.

Bei erzwungener Konvektion könnte der Spalt 128 je nach Länge des Luftweges auch kleiner als 10 mm sein. Die Anordnung des Gebläses 148 kann sowohl eine Luftzufuhr als auch eine Luftabsaugung realisieren. Mit dem gezeigten Ausführungsbeispiel eines Wärmeübertragers 150 ist an der zur Außenhaut 4 bündig ausgerichteten Begrenzungsfläche 140 weiterhin Kühlung im Fluge und eine freie Konvektion am Boden möglich.

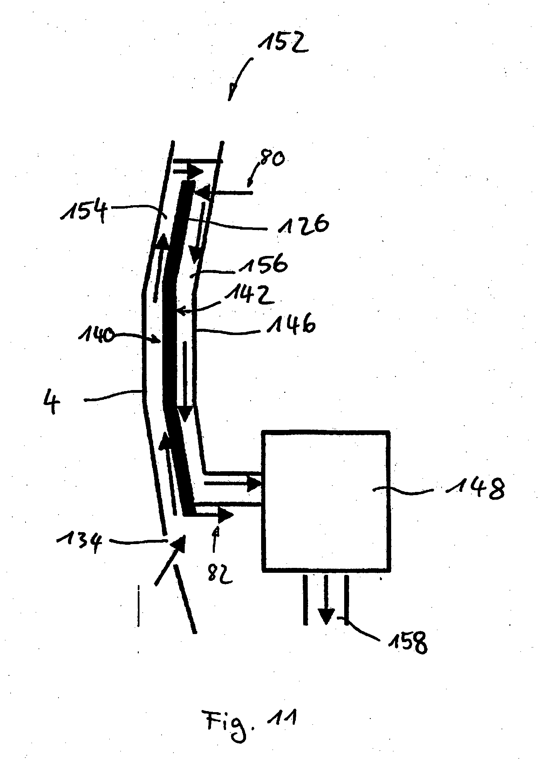

Figur 11 zeigt eine erzwungene Luftführung auf den Begrenzungsflächen 140 und 142 an einem Wärmeübertrager 152 mit einem einzelnen Spalt 134. Hierbei wird die Kühlung durch das Gebläse 148 alleine erreicht. Im Fluge kann bei nicht in Betrieb genommenen Gebläse 148 Luft durch Spalte 154 und 156, die sich zwischen der Platte 126 und der Außenhaut 4 oder dem Druckschott 146 befinden, bewegt werden, wenn der am Spalt 134 anliegende Druck einen an einem Luftaustritt 158 anliegenden Druck übersteigt. Sollte eine Belüftung am Boden erwünscht sein, muss der Luftaustritt 158 oberhalb des Spalts 134 angeordnet sein. Die Kühlwirkung ist mit dem erfindungsgemäßen Wärmeübertrager 152 sehr hoch und dadurch besonders für den Bodenbetrieb geeignet.

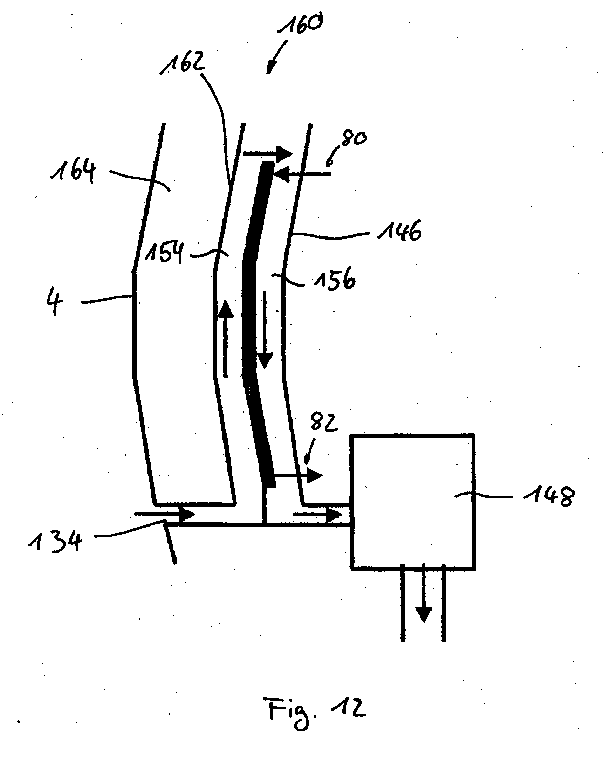

Schließlich wird in Fig. 12 ein Ausführungsbeispiel eines Wärmeübertragers gezeigt, der über einen einzelnen Schlitz 134 in der Außenhaut 4 verfügt. Die Besonderheit dieses Ausführungsbeispiels liegt darin, dass bei Betrieb des Gebläses 148 eine größtmögliche Kühlung an einer Innenseite 162 eines Spants 164 erreicht wird. Der Wärmeübertrager muss nicht an eine Außenseite von Spanten 164 Spante integriert werden, er kann auch auf Innenseiten 162 von Spanten 164 oder zwischen den Spanten 164 in das Flugzeug integriert werden.

Weiterhin denkbar wäre auch, den Wärmeübertrager 160 in einen Fußboden einer Passagierkabine zu integrieren, um damit gleichzeitig in großen Flughöhen unterkühlte Bereiche (unterhalb der Passagierkabine befindlicher Gepäckraum und dergleichen) aufzuheizen. Auf diese Weise erschließt sich eine große Fläche, mit wenig Beeinflussung des Bauraums. Vorausgesetzt ist eine entsprechende Stabilität und Dichtigkeit über das Druckschott 146 im druckbeaufschlagten Bereich. Hierbei ist keine Modifikation der Struktur des Flugzeugs erforderlich, die etwa zu einer Umkonfiguration von Spanten und dergleichen führen könnte.

Zu den Ausführungsbeispielen der Figuren 7a bis 12 ist darauf hinzuweisen, dass als Gehäuse die Mittel zum räumlichen Begrenzen des jeweiligen Wärmeübertragers zu verstehen ist, so dass dieses Gehäuse etwa aus Außenhaut und Druckschott sowie weiteren zum Herstellen einer Dichtheit benötigter Elemente hergestellt ist. Weiterhin weisen auch diese Ausführungsbeispiele zumindest teilweise eine lasttragende Funktion auf. Selbstverständlich können auch sämtliche Spalte mit Kühlrippen und dergleichen versehen werden, um die Kühlung noch weiter zu verbessern.

Sämtliche Ausführungsbeispiele sind dazu geeignet, an freien Hautfeldern zwischen Spanten und Stringern eines Flugzeugrumpfs angeordnet zu werden. Gleichermaßen ist auch denkbar, den Außendurchmesser von Spanten so zu ändern, dass zwischen Spantaußenseiten und der Außenhaut des Flugzeugs die Wärmeübertrager angeordnet werden können.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebene Ausführungsbeispiele verwendet werden können. Bezugszeichen in den Ansprüchen sind nicht als Einschränkung anzusehen.

### BEZUGSZEICHEN

- 2: Wärmeübertrager
- 4: Außenhaut
- 6: Innenseite
- 7: Rumpfsektion
- 8: Außenseite
- 9: radiale Einbuchtung
- 10: Kühlmittelkanal
- 11: Wärmeübertrager
- 12: Wärmeübertrager
- 14: Trägerplatte
- 16: Kühlmittelkanal
- 18: Steg
- 20: Deckel
- 22: Aussparung zur Befestigung des Wärmeübertragers
- 24: Wärmeübertrager
- 26: Kühlmittelkanal
- 28: Trägerplatte
- 30: Aussparung zur Befestigung des Wärmeübertragers
- 32: Kühlrippe
- 34: Kühlmittelkanal
- 36: Kühlrippe
- 38: Wärmeübertrager,
- 40: Sandwich-Panel
- 42: Trägerplatte
- 43: Wärmeübertrager
- 44: Druckschott
- 45: Luftkanal
- 46: Wandung
- 47: Kühlmittelkanal
- 48: Kühlmittelkanal
- 49: Wellblech
- 50: Wärmeübertrager
- 51: Deckblecht
- 52: Kühlmittelkanal
- 53: Kühlrippe oder Verwirbelungskörper
- 54: Kühlrippe
- 56: Steg
- 58: Deckel
- 60: Spalt
- 62: Trägerplatte
- 64: Lufteingang
- 66: Öffnung
- 68: Luftausgang
- 70: Wärmeübertrager
- 72: Lufteingang
- 74: Luftausgang
- 76: Kühlmittelkanal
- 78: Gebläse
- 80: Zufuhrleitung
- 82: Abfuhrleitung
- 84: Druckschott
- 86: Kühlrippen
- 88: Kühlmittelkanal
- 90: Wärmeübertrager
- 92: Kühlmittelkanal
- 94: Lufteingang
- 96: Luftausgang
- 98: Gebläse
- 100: Stringer
- 102: Druckschott
- 104: Wärmeübertrager
- 106: Kühlmittelkanal
- 108: Lamellenkühler
- 110: Gebläse
- 112: Sammelwärmeübertrager
- 114: Wärmequelle
- 116: Wärmeübertrager
- 118: Wärmeübertrager
- 120: Kanal
- 122: Kanal
- 124: Wärmeübertrager
- 126: Platte
- 128: Spalt
- 130: Außenhaut
- 132: Schlitz
- 134: Schlitz
- 136: Flugrichtung
- 138: Fenster
- 140: Begrenzungsfläche
- 142: Begrenzungsfläche
- 144: Wärmeübertrager
- 146: Druckschott
- 148: Gebläse
- 150: Wärmeübertrager
- 152: Wärmeübertrager
- 154: Spalt
- 156: Spalt
- 158: Luftaustritt
- 160: Wärmeübertrager
- 162: Spantinnenseite
- 164: Spant

## Patentansprüche

1. Flugzeug mit mindestens einem Wärmeübertrager (2, 11,43, 12, 24, 30, 38, 50, 70, 90, 104, 116, 118, 124, 144, 150, 152, 160) für eine Außenhaut des Flugzeugs, der mindestens eine Wärmeübertrager aufweisend
- mindestens eine Zufuhrleitung (80) für ein Kühlmittel,
- mindestens eine Abfuhrleitung (82) für das Kühlmittel, und
- mindestens ein Bündel von Kühlmittel durchströmten Kühlmittelkanälen (10, 16, 26, 34, 47, 48, 52, 76, 88, 92, 106, 120),
- mindestens einen Spalt (60, 128, 154, 156) zwischen den Kühlmittelkanälen (10, 16, 26, 34, 47, 48, 52, 76, 88, 92, 106, 120) und einem Deckel (20, 58) eines Stege (18, 56) aufweisenden Gehäuses zum Aufnehmen der Kühlmittelkanäle (10, 16, 26, 34, 47, 48, 52, 76, 88, 92, 106, 120), der zum Durchströmen von Luft mindestens einen Lufteingang (64, 72, 94) und mindestens einen Luftausgang (69, 78, 96) aufweist,
wobei die Kühlmittelkanäle (10, 16, 26, 34, 48, 52, 76, 88, 92, 106) zum Abgeben von Wärme an die Umgebung des Flugzeugs bei an der Außenhaut (4) des Flugzeugs befestigtem Wärmeübertrager (2, 11, 43, 12, 24, 30, 38, 50, 70, 90, 104, 116, 118, 124, 144, 150, 152, 160) zumindest bereichsweise direkt an der Außenhaut (4) des Flugzeugs positioniert sind,
**gekennzeichnet durch** zwei in Flugzeughochrichtung voneinander beabstandete Schlitze (134, 132) in der Außenhaut (4) des Flugzeugs zum Erzeugen einer Konvektionsströmung von Luft aus der Umgebung des Flugzeugs in den mindestens einen Spalt (128, 154, 156).

2. Flugzeug nach Anspruch 1, bei dem das Gehäuse zumindest bereichsweise eine lasttragende Rumpfstruktur bildet.

3. Flugzeug nach Anspruch 1 oder 2, bei dem zwischen den Kühlmittelkanälen (10, 16, 26, 34, 48, 52, 76, 88, 92, 106, 120) eine oder mehrere Kühlrippen (32, 36, 54, 86) angeordnet sind.

4. Flugzeug nach einem der vorhergehenden Ansprüche, bei dem die Stege (18, 56) und/oder Kühlrippen (32, 36, 53, 54, 86) Wirbelkanten und/oder Öffnungen zum Verwirbeln von vorbeiströmender Luft aufweisen.

5. Flugzeug nach einem der vorhergehenden Ansprüche, bei dem die Kühlmittelkanäle (10, 16, 26, 34, 48, 52, 76, 88, 92, 106, 120) an der Innenseite (6) der Außenhaut (4) angeordnet sind.

6. Flugzeug nach einem der Ansprüche 1-4, bei dem die Kühlmittelkanäle (10, 16, 26, 34, 47, 48, 52, 76, 88, 92, 106, 120) an der Außenseite (8) der Außenhaut (4) angeordnet sind.

7. Flugzeug nach einem der vorhergehenden Ansprüche, bei dem die Kühlmittelkanäle (10, 16, 26, 34, 47, 48, 52, 76, 88, 92, 106, 120) zumindest bereichsweise als Leitungen mit im Wesentlichen rundem Querschnitt oder mit im Wesentlichen eckigem Querschnitt ausgeführt sind.

8. Flugzeug nach einem der Ansprüche 1-6, bei dem die Kühlmittelkanäle (10, 16, 26, 34, 47, 48, 52, 76, 88, 92, 106, 120) in einem Sandwichkern (40) bereitgestellt werden.

9. Flugzeug nach einem der vorhergehenden Ansprüche, ferner aufweisend ein Gebläse 148 zum Fördern von Luft in den oder aus dem mindestens einen Spalt (128, 154, 156).

10. Flugzeug nach einem der vorhergehenden Ansprüche 9 bis 11, wobei die Schlitze (134, 132) parallel zur Flugrichtung (130) verläufen.

11. Flugzeug nach einem der vorhergehenden Ansprüche, mit einem Kühlsystem, das Kühlsystem aufweisend mindestens einen geschlossenen Kühlmittelkreislauf, der mit den Kühlmittelkanälen gekoppelt ist.

12. Flugzeug nach Anspruch 11, wobei mindestens einer des mindestens einen Wärmeüberträgers ein Sammelwärmeübertrager (112) zum Aufnehmen von Wärme aus einer oder mehreren Wärmequellen (114) und zum Abgeben von Wärme an einen mehrere Wärmeübertrager (2, 11, 43, 12, 24, 30, 38, 50, 70, 90, 104, 116, 118, 124, 144, 150, 152, 160) ist.

## Claims

1. Aircraft having at least one heat transfer device (2, 11, 43, 12, 24, 30, 38, 50, 70, 90, 104, 116, 118, 124, 144, 150, 152, 160) for an outer skin of the aircraft, the at least one heat transfer device comprising:
- at least one supply line (80) for a coolant,
- at least one discharge line (82) for the coolant,
- at least one bunch of coolant ducts (10, 16, 26, 34, 47, 48, 52, 76, 88, 92, 106, 120) through which coolant flows, and
- at least one gap (60, 128, 154, 156) between the coolant ducts (10, 16, 26, 34, 47, 48, 52, 76, 88, 92, 106, 120) and a cover (20, 58) of a housing for receiving the coolant ducts (10, 16, 26, 34, 47, 48, 52, 76, 88, 92, 106, 120), which housing comprises webs (18, 56), the gap comprising at least one air inlet (64, 72, 94) and at least one air outlet (69, 78, 96) for the purpose of allowing air to flow through it
wherein the coolant ducts (10, 16, 26, 34, 47, 48, 52, 76, 88, 92, 106, 120) for the purpose of emitting heat to the surroundings of the aircraft in the case of a heat transfer device (2, 11, 43, 12, 24, 30, 50, 70, 90, 104, 116, 118, 124, 144, 150, 152, 160) attached to the outer skin (4) of the aircraft are at least in some regions positioned directly on the outer skin (4) of the aircraft,
**characterized by** two vertically distanced slits (134, 132) in the outer skin (4) of the aircraft for creating a convection current of air flowing from the surrounding of the aircraft into at least one gap (128, 154, 156).

2. The aircraft of claim 1, wherein the housing at least in some regions forms a load-bearing fuselage structure.

3. The aircraft of claim 1 or 2, wherein one or several cooling fins (32, 36, 54, 86) are arranged between the coolant ducts (10, 16, 26, 34, 48, 52, 76, 88, 92, 106, 120).

4. The aircraft of any one of the preceding claims, wherein the webs (18, 56) and/or the cooling fins (32, 36, 53, 54, 86) comprise vortex inducers and/or openings for swirling air that flows past.

5. The aircraft of any one of the preceding claims, wherein the coolant ducts (10, 16, 26, 34, 48, 52, 76, 88, 92, 106, 120) are arranged on the interior (6) of the outer skin (4).

6. The aircraft of any one of claims 1-4, wherein the coolant ducts (10, 16, 26, 34, 48, 52, 76, 88, 92, 106, 120) are arranged on the exterior (8) of the outer skin (4).

7. The aircraft of any one of the preceding claims, wherein the coolant ducts (10, 16, 26, 34, 48, 52, 76, 88, 92, 106, 120) at least in some regions comprise lines with an essentially round cross section or with an essentially angular cross section.

8. The aircraft of any one of claims 1-6, in which the coolant ducts (10, 16, 26, 34, 48, 52, 76, 88, 92, 106, 120) are provided in a sandwich core (40).

9. The aircraft of any one of the preceding claims, further comprising a blower (148) for conveying air into or out from the at least one gap (128, 154, 156).

10. The aircraft of any one of the preceding claims, wherein the slits (134, 132) are oriented parallelly to the flight direction.

11. The aircraft of any of the preceding claims having a cooling system, the cooling system comprising at least one closed coolant circuit coupled with the cooland ducts.

12. The aircraft of claim 11, wherein the at least one of the at least one heat transfer device comprises a collective heat transfer device (112) for absorbing heat from one or several heat sources (114) and for emitting heat to one or several heat transfer devices (2, 11, 43, 12, 24, 30, 38, 50, 70, 90, 104, 116, 118, 124, 144, 150, 152, 160).

## Revendications

1. Aéronef comportant au moins un échangeur thermique (2, 11, 43, 12, 24, 30, 38, 50, 70, 90, 104, 116, 118, 124, 144, 150, 152, 160) pour une enveloppe extérieure de l'aéronef, l'au moins un échangeur thermique présentant :
- au moins une conduite d'alimentation (80) pour un agent réfrigérant,
- au moins une conduite d'évacuation (82) pour l'agent réfrigérant, et
- au moins un groupe de canaux d'agent réfrigérant (10, 16, 26, 34, 47, 48, 52 76, 88, 92, 106, 120) traversés par l'agent réfrigérant,
- au moins une fente (60, 128, 154, 156) entre les canaux d'agent réfrigérant (10, 16, 26, 34, 47, 48, 52, 76, 88, 92, 106, 120) et un couvercle (20, 58) d'un boîtier présentant des traverses (18, 56) pour recevoir les canaux d'agent réfrigérant (10, 16, 26, 34, 47, 48, 52, 76, 88, 92, 106, 120), laquelle présente au moins une entrée d'air (64, 72, 94) et au moins une sortie d'air (69, 78, 96) pour la traversée de l'air,
dans lequel les canaux d'agent réfrigérant (10, 16, 26, 34, 48, 52, 76, 88, 92, 106) sont positionnés directement sur l'enveloppe extérieure (4) de l'aéronef au moins par zones, pour dissiper de la chaleur à l'environnement de l'aéronef lorsqu'un échangeur thermique (2, 11, 43, 12, 24, 30, 38, 50, 70, 90, 104, 116, 118, 124, 144, 150, 152, 160) est fixé sur l'enveloppe extérieure (4) de l'aéronef,
**caractérisé par** deux encoches (134, 132), distantes l'une de l'autre dans la direction verticale de l'aéronef, dans l'enveloppe extérieure (4) de l'aéronef pour générer un courant de convection d'air provenant de l'environnement de l'aéronef dans l'au moins une fente (128, 154, 156).

2. Aéronef selon la revendication 1, dans lequel le boîtier forme au moins par zones une structure de fuselage porteuse.

3. Aéronef selon la revendication 1 ou 2, dans lequel une ou plusieures ailettes de refroidissement (32, 36, 54, 86) sont disposées entre les canaux d'agent réfrigérant (10, 16, 26, 34, 48, 52, 76, 88, 92, 106, 120).

4. Aéronef selon une des revendications précédentes, dans lequel les traverses (18, 56) et/ou ailettes de refroidissement (32, 36, 53, 54, 86) présentent des bords tourbillonnants et/ou des ouvertures pour faire tourbillonner de l'air passant devant.

5. Aéronef selon une des revendications précédentes, dans lequel les canaux d'agent réfrigérant (10, 16, 26, 34, 48, 52, 76, 88, 92, 106, 120) sont disposés sur la face intérieure (6) de l'enveloppe extérieure (4).

6. Aéronef selon une des revendications 1 à 4, dans lequel les canaux d'agent réfrigérant (10, 16, 26, 34, 47, 48, 52, 76, 88, 92, 106, 120) sont disposés sur la face extérieure (8) de l'enveloppe extérieure (4).

7. Aéronef selon une des revendications précédentes, dans lequel les canaux d'agent réfrigérant (10, 16, 26, 34, 47, 48, 52, 76, 88, 92, 106, 120) sont réalisés au moins par zones sous la forme de conduite avec une section sensiblement ronde ou avec une section sensiblement angulaire.

8. Aéronef selon une des revendications 1 à 6, dans lequel les canaux d'agent réfrigérant (10, 16, 26, 34, 47, 48, 52, 76, 88, 92, 106, 120) sont fournis dans un noyau en sandwich (40).

9. Aéronef selon une des revendications précédentes, présentant en outre un ventilateur (148) pour transporter l'air dans l'au moins une fente (128, 154, 156) ou en dehors de celle-ci.

10. Aéronef selon une des revendications précédentes, dans lequel les encoches (134, 132) s'étendent parallèlement à la direction de vol (130).

11. Aéronef selon une des revendications précédentes, comportant un système de refroidissement, le système de refroidissement présentant au moins un circuit d'agent réfrigérant fermé qui est couplé aux canaux d'agent réfrigérant.

12. Aéronef selon la revendication 11, dans lequel au moins un d'au moins un échangeur thermique est un échangeur thermique de collecte (112) destiné à recevoir la chaleur provenant d'une ou de plusieurs sources de chaleur (114) et à dissiper la chaleur vers un ou plusieurs échangeurs thermiques (2, 11, 43, 12, 24, 30, 38, 50, 70, 90, 104, 116, 118, 124, 144, 150, 152, 160).
